# EUROPEAN PATENT APPLICATION

(11) **EP 4 431 677 A1**
(43) Date of publication of application: **18.09.2024**
(21) Application number: 24158395.4
(22) Date of filing: 19.02.2024
(51) Int. Cl.: E04G 5/04, E04D 13/10, E04D 13/12, E04G 21/32, F16B 7/00, F16G 11/00

(54) **AN ATTACHMENT ARRANGEMENT FOR THE ATTACHMENT OF A FIRST ELEMENET TO A SECOND ELEMENT**

(30) Priority: 14.03.2023 SE 2350279
(71) Applicant: CWL Patent AB, 792 22 Mora (SE)
(72) Inventor: LUNDBERG, Bengt, 792 51 Mora (SE)
(74) Representative: Ehrner & Delmar Patentbyrå AB

(57) **Abstract**

An attachment arrangement (100; 200; 300; 400; 500; 600; 700) for the attachment of a first element (102) to a second element (104), the first element (102) comprising a wire (106). The attachment arrangement has a tubular member (112) forming first and second inlets (116, 120). The first inlet (116) is configured to receive at least a portion (124) of the first element (102). The tubular member (112) is configured to house said at least one portion (124) of the first element (102) and hold the first element (102). The second inlet (120) is configured to receive at least a portion (126) of the second element (104). The tubular member (112) is configured to house said at least one portion (126) of the second element (104) and hold the second element (104). The tubular member (112; 212; 312; 412; 512; 612; 712) forms two or more inspection windows (128a-b; 328a-c; 428a-d; 528a-d) positioned between the first and second inlets (116, 120). The two or more inspection windows (128a-b; 328a-c; 428a-d; 528a-d) are positioned one after another for visual inspection of the positions of the first and second elements (102, 104) within the tubular member (112; 212; 312; 412; 512; 612; 712). The tubular member (112; 212; 312; 412; 512; 612; 712) comprises a shell (138; 638) having a longitudinal extension (122) and forming the two or more inspection windows (128a-b; 628a-d).

## Description

### Technical field

Aspects of the present invention relate to an attachment arrangement for the attachment of a first element to a second element, the first element comprising a wire having a longitudinal extension.

### Background

Conventionally, roof or wall equipment and/or equipment devices may be mounted or attached to the roof or wall of a building by way of attachments. For example, the roof or wall equipment and/or equipment devices may include ladders, walkways and steps for users, snow rails or fences for preventing snow from sliding off of the roof, ridge and roof foot rails, guardrails and safety wires to which a user may be connected via a safety rope or line having a carabiner or any other loop element. Conventionally, the safety wire may extend along the roof and/or wall of the building.

### Summary

The inventors of the present invention have found drawbacks in conventional solutions for attaching roof or wall equipment and/or equipment devices, especially wires or safety wires, to the roof and/or wall of a building, or to any other element, such as a bracket. For example, some conventional solutions do not a provide a sufficient attachment of the roof or wall equipment and/or equipment devices, such as a wire, to the roof and/or wall, or to any other element, such as a bracket. For example, some conventional solutions for attaching wires are too complex to apply by users.

An object of embodiments of the invention is to provide a solution which mitigates or solves drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with an attachment arrangement for the attachment of a first element to a second element, the first element comprising a wire having a longitudinal extension, the second element having a longitudinal extension,
wherein the attachment arrangement comprises a tubular member,
wherein the tubular member comprises a first end portion forming a first inlet,
wherein the tubular member comprises a second end portion forming a second inlet,
wherein the tubular member has a longitudinal extension extending from the first end portion to the second end portion,
wherein the first inlet is configured to receive at least a portion of the first element,
wherein the tubular member is configured to house said at least one portion of the first element received by the first inlet and configured to hold the first element,
wherein the second inlet is configured to receive at least a portion of the second element,
wherein the tubular member is configured to house said at least one portion of the second element received by the second inlet and configured to hold the second element,
wherein the tubular member forms two or more inspection windows positioned between the first and second inlets,
wherein the two or more inspection windows are positioned one after another in the direction of the longitudinal extension of the tubular member for the visual inspection of the positions of the first and second elements within the tubular member, and
wherein the tubular member comprises a shell having a longitudinal extension and forming the two or more inspection windows.

An advantage of the attachment arrangement according to the first aspect is that the attachment of the wire, for example to a roof or wall is improved, and/or to a bracket, or console, attached to the roof or wall. An advantage of the attachment arrangement according to the first aspect is that the strength of the attachment of the wire is improved or enhanced, or that the wire is more strongly secured, for example to the roof or wall. An advantage of the attachment arrangement according to the first aspect is that the flexibility of the attachment of the wire is improved. For example, by way of the series of inspection windows, a quicker, more secure and less complicated procedure for the user to attach the wire, for example to the roof or wall, in relation to conventional solutions is provided. For example, by way of the series of inspection windows, it can be assured that the first and second elements have suitable and proper positions within the tubular member, for example before each one of the first and second elements is fixed, or locked, to the tubular member, since the first and second elements are visible in one or more of the inspection windows when they have suitable and proper positions. An advantage of the attachment arrangement according to the first aspect is that also after installation, the positions of the first and second elements within the tubular member can be inspected by way of the inspection windows, for example during follow-up checks, and thus, the strength and quality of the attachment can be checked during follow-up checks.

An advantage of the attachment arrangement according to the first aspect is that the two or more inspection windows also provide ventilation of the inside of the tubular member, and thus, condensation is avoided or removed, whereby corrosion, or rust, is avoided. Further, the removal or avoidance of condensation prevents condensation from turning into ice when the temperature is below zero degrees Celsius, whereby the risk of ice formation negatively affecting, such as breaking, the attachment is avoided or reduced.

According to an advantageous embodiment of the attachment arrangement according to the first aspect, the tubular member has a center section located between the first end portion and the second end portion,
wherein the distance between the center section and the first end portion is equal to the distance between the center section and the second end portion,
wherein one or more inspection windows of the two or more inspection windows is/are located between the center section and the first end portion, and
wherein one or more inspection windows of the two or more inspection windows is/are located between the center section and the second end portion.

An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to a further advantageous embodiment of the attachment arrangement according to the first aspect, the tubular member forms four or more inspection windows positioned between the first and second inlets,
wherein the four or more inspection windows are positioned one after another in the direction of the longitudinal extension of the tubular member for the visual inspection of the positions of the first and second elements within the tubular member. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure. An advantage of this embodiment is that process of determining that the first and second elements have suitable and proper positions within the tubular member, for example before each one of the first and second elements is fixed, or locked, to the tubular member, is further improved, since one or more the first and second elements is/are visible in two or more of the inspection windows when they have suitable and proper positions.

According to another advantageous embodiment of the attachment arrangement according to the first aspect, the tubular member comprises a center section located between the first end portion and the second end portion,
wherein the distance between the center section and the first end portion is equal to the distance between the center section and the second end portion, and
wherein two or more inspection windows of the four or more inspection windows are located between the center section and the first end portion.

An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to yet another advantageous embodiment of the attachment arrangement according to the first aspect, two or more inspection windows of the four or more inspection windows are located between the center section and the second end portion. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to still another advantageous embodiment of the attachment arrangement according to the first aspect, the longitudinal extension of the tubular member extends in a longitudinal direction.

According to an advantageous embodiment of the attachment arrangement according to the first aspect, at one of the first and second end portions the tubular member comprises one or more inner surfaces adjoining one of the first and second inlets, wherein the inner surface comprises one or more internal threads. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to a further advantageous embodiment of the attachment arrangement according to the first aspect, the one or more internal threads is/are configured for the engagement with one or more external threads of the second element. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to another advantageous embodiment of the attachment arrangement according to the first aspect, the second element comprises one of the group of:
- a wire having a longitudinal extension;
- a threaded element having one or more external threads; and
- a rigid threaded element having one or more external threads.

An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to still another advantageous embodiment of the attachment arrangement according to the first aspect, the second element is configured for the attachment to a bracket attachable to a structure of a building. For example, the structure may comprise a roof or wall of a building. An advantage of this embodiment is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient and secure.

According to yet another advantageous embodiment of the attachment arrangement according to the first aspect, wherein the first element is configured for the attachment to a bracket attachable to a structure of a building. For example, the structure may comprise a roof or wall of a building. An advantage of this embodiment is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient and secure.

According to another advantageous embodiment of the attachment arrangement according to the first aspect, the shell is at least partially deformable from the action of a gripper or clamping tool so as to lock one or more of the first and second elements. An advantage of this embodiment is that no screws, rivets, bolts and nuts are required to attach the wire to the second element. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure.

According to yet another advantageous embodiment of the attachment arrangement according to the first aspect, the shell comprises one or more walls forming the two or more inspection windows.

According to still another advantageous embodiment of the attachment arrangement according to the first aspect, between the first and second end portions the thickness of the wall of the shell exceeds the thickness of the wall of shell at the first and second inlets. An advantage of this embodiment is that the attachment of the wire is further improved. An advantage of this embodiment is that the flexibility of the attachment of the wire is further improved. An advantage of this embodiment is that the process of attaching the wire is further facilitated and made more efficient and secure. For example, the wire may be more easily inserted into the inlet without expanding the outer radial dimension of the tubular member.

According to an advantageous embodiment of the attachment arrangement according to the first aspect, the tubular member forms one or more inner spaces opening to one or more of the first and second inlets, wherein the one or more inner spaces is/are configured to house one or more of said at least one portion of the first element received by the first inlet and said at least one portion of the second element received by the second inlet.

According to a further advantageous embodiment of the attachment arrangement according to the first aspect, one or more of the first and second end portions is/are tapered in a direction away from the other one of the first and second end portions. An advantage of this embodiment is that the attachment of the wire is further improved. An advantage of this embodiment is that the flexibility of the attachment of the wire is further improved. For example, a safety line coupler, which may be coupled to the wire, may more easily pass the tubular member because of the tapered ends of the tubular member.

According to another advantageous embodiment of the attachment arrangement according to the first aspect, the longitudinal extension of the tubular member is configured to extend in a longitudinal direction in parallel to the longitudinal extension of the wire. An advantage of this embodiment is that the attachment of the wire is further improved.

According to still another advantageous embodiment of the attachment arrangement according to the first aspect, the attachment arrangement comprises one or more of the group of:
- the first element; and
- the second element.

According to yet another advantageous embodiment of the attachment arrangement according to the first aspect, one or more of the tubular member, first element and second element is/are made of a material comprising or consisting of a metal or a metal alloy. An advantage of these embodiments is that the attachment of the wire is further improved. An advantage of this embodiment is that the strength of the attachment of the wire is further enhanced. According to this embodiment, the tubular member, the first element, the second element and/or the attachment arrangement can be manufactured in an efficient manner. However, other materials are possible, such as a polymer or a polymer composite.

According to a second aspect of the invention, the above mentioned and other objects are achieved with a roof or wall installation, such as a roof installation, comprising one or more attachment arrangements according to any one of the embodiments disclosed above or below.

According to a third aspect of the invention, the above mentioned and other objects are achieved with a roof or wall arrangement comprising a roof or wall, for example a roof arrangement comprising a roof, and one or more of the group of:
- an attachment arrangement according to any one of the embodiments disclosed above or below; and
- a roof or wall installation according to any one of the embodiments disclosed above or below.

The above-mentioned features and embodiments of the attachment arrangement, the roof or wall installation and the roof or wall arrangement, respectively, may be combined in various possible ways providing further advantageous embodiments.

Further advantageous embodiments of the attachment arrangement, the roof or wall installation and the roof or wall arrangement according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic side view of a first embodiment of the attachment arrangement according to the first aspect of the invention;
- Figure 2A: is a schematic front view of the attachment arrangement of figure 1;
- Figure 2B: is a schematic rear view of the attachment arrangement of figure 1;
- Figure 3: is a schematic side view of a first embodiment of the attachment arrangement according to the first aspect of the invention together with the first and second elements;
- Figure 4: is a schematic sectional side view of the attachment arrangement of figure 1;
- Figure 5: is a schematic sectional side view of the attachment arrangement of figure 1 together with the first and second elements;
- Figure 6: is a schematic sectional side view of a second embodiment of the attachment arrangement according to the first aspect of the invention together with the first and second elements;
- Figure 7: is a schematic side view of a third embodiment of the attachment arrangement according to the first aspect of the invention together with the first and second elements;
- Figure 8: is a schematic side view of a fourth embodiment of the attachment arrangement according to the first aspect of the invention together with the first and second elements;
- Figure 9: is a schematic sectional side view of the attachment arrangement of figure 8 together with the first and second elements;
- Figure 10: is a schematic side view of a fifth embodiment of the attachment arrangement according to the first aspect of the invention together with the first and second elements;
- Figure 11: is a schematic sectional side view of the attachment arrangement of figure 10 together with the first and second elements;
- Figure 12: is a schematic sectional side view of a sixth embodiment of the attachment arrangement according to the first aspect of the invention; and
- Figure 13: is a schematic side view of a seventh embodiment of the attachment arrangement according to the first aspect of the invention.

### Detailed Description

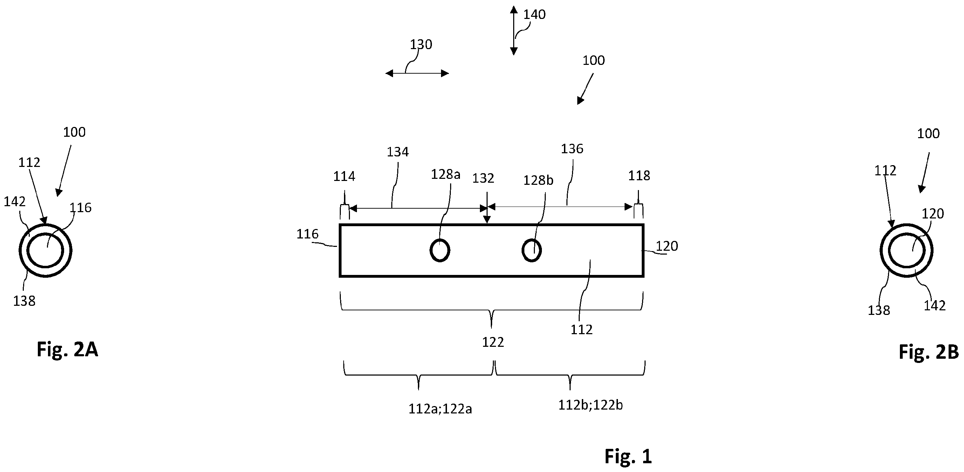

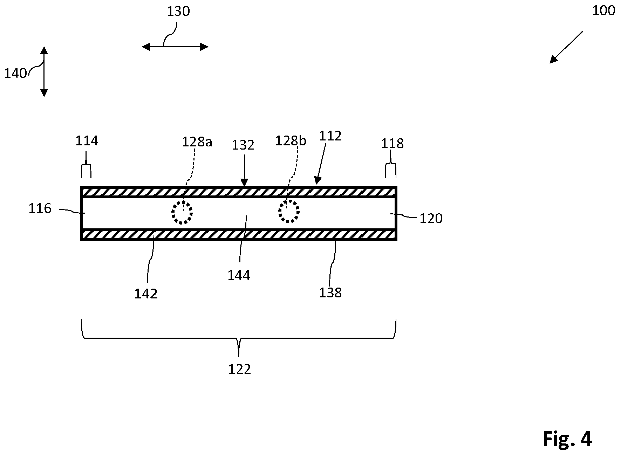

With reference to figures 1 to 5, a first embodiment of the attachment arrangement 100 for the attachment of a first element 102 to a second element 104 according to the first aspect of the invention is schematically illustrated. The first element 102 includes a wire 106 having a longitudinal extension 108. The second element 104 also has a longitudinal extension 110.

With reference to figures 1 to 5, the attachment arrangement 100 includes a tubular member 112. For some embodiments, the tubular member 112 may be described as a pipe. The tubular member 112 includes a first end portion 114, or a first end, forming a first inlet 116, opening, or entry. The tubular member 112 includes a second end portion 118, or a second end, forming a second inlet 120. The tubular member 112 has a longitudinal extension 122 extending from the first end portion 114to the second end portion 118. The first inlet 116 is configured to receive at least a portion 124 of the first element 102. The tubular member 112 is configured to house said at least one portion 124 of the first element 102 received by the first inlet 116 and configured to hold the first element 102. The second inlet 120 is configured to receive at least a portion 126 of the second element 104. The tubular member 112 is configured to house said at least one portion 126 of the second element 104 received by the second inlet 120 and configured to hold the second element 104. For some embodiments, it may be defined that the tubular member 112 is configured to be attached to, configured to connect to and/or configured to engage with one or more of the first and second elements 102, 104.

With reference to figures 1 to 5, the tubular member 112 forms two or more inspection windows 128a-b, or inspection openings, through-holes or apertures, positioned between the first and second inlets 116, 120. The two or more inspection windows 128a-b are positioned one after another in the direction 130 of the longitudinal extension 122 of the tubular member 112 for the visual, or ocular, inspection of the positions of the first and second elements 102, 104 within the tubular member 112. For some embodiments, it may be defined that the inspection windows 128a-b are positioned in series, for example along an imaginary straight line, or in a zig zag configuration, in the direction 130 of the longitudinal extension 122 of the tubular member 112. For the embodiment illustrated in figures 1 to 5, the tubular member 112 forms two inspection windows 128a-b. However, as also illustrated hereinbelow, for some embodiments, the tubular member 112 may form more than two inspection windows, such as three, four, or more inspection windows. The length of the longitudinal extension 122 of the tubular member 112 may vary and may be adapted to various applications. For example, the length of the longitudinal extension 122 of the tubular member 112 may be in the range of 10 to 30 cm. However, other lengths of the longitudinal extension 122 are also possible. The tubular member 112 includes a shell 138. The shell 138 has a longitudinal extension 122. The shell 138 forms the two or more inspection windows 128a-b.

With reference to figure 1, for some embodiments, it may be defined that the tubular member 112 has a center section 132, or a middle, located between the first end portion 114 (or the first inlet 116) and the second end portion 118 (or the second inlet 120). The distance 134 between the center section 132 and the first end portion 114 is equal to the distance 136 between the center section 132 and the second end portion 118. For some embodiments, it may be defined that the distance between the center section 132 and the first inlet 116 is equal to the distance between the center section 132 and the second inlet 120. For some embodiments, it may be defined that one or more inspection windows 128a of the two or more inspection windows 128a-b is/are located between the center section 132 and the first end portion 114, and that one or more inspection windows 128b of the two or more inspection windows 128a-b is/are located between the center section 132 and the second end portion 118. For some embodiments, it may be defined that one or more inspection windows 128a of the two or more inspection windows 128a-b is/are located between the center section 132 and the first inlet 116, and that one or more inspection windows 128b of the two or more inspection windows 128a-b is/are located between the center section 132 and the second inlet 120.

With reference to figure 1, for some embodiments, it may be described that the tubular member 112 comprises a first longitudinal section 112a and a second longitudinal section 112b, wherein each of the first and second longitudinal sections 112a, 112b has a longitudinal extension 122a, 122b, wherein the length of the longitudinal extension 122a of the first longitudinal section 112a is equal to the length of the longitudinal extension 122b of the second longitudinal section 112b, wherein the first longitudinal section 112a comprises one or more inspection windows 128a of the two or more inspection windows 128a-b, and wherein the second longitudinal section 112b comprises one or more inspection windows 128b of the two or more inspection windows 128a-b.

With reference to figure 1, for some embodiments, it may be defined that the longitudinal extension 122 of the tubular member 112 extends in a longitudinal direction direction 130. For some embodiments, the tubular member 112 may be straight, i.e. not bent, or curved, in a considerable degree.

With reference to figures 2A and 2B, for some embodiments, one or more of the first and second inlets 116, 120 may be circular. For some embodiments, the outer cross-section of the tubular member 112 may be circular. However, other various shapes and/or sizes of the first and second inlets 116, 120 and of the outer cross-section of the tubular member 112 are possible, such oval, rectangular, squared etc. For example, the shape and size of the first and second inlets 116, 120, respectively, may be adapted to the size and shape of the first and second elements 102, 104, respectively.

With reference to figures 1 to 5, for some embodiments, the shell 138 may be at least partially deformable, or collapsible, from (or under) the action of a gripper or clamping tool so as to lock one or more of the first and second elements 102, 104 to the tubular member 112. More specifically, the shell 138 may be at least partially deformable in a radial direction 140, or in a direction transverse to the direction 130 of the longitudinal extension 122 of the tubular member 112. However, for other embodiments, other means for locking one or more of the first and second elements 102, 104 to the tubular member 112 are possible, such as screws, or rivets. For some embodiments, it may be defined that the shell 138 comprises one or more walls 142 forming the two or more inspection windows 128a-b.

With reference to figures 1 to 5, for some embodiments, it may be defined that the tubular member 112 forms one or more inner spaces 144 opening to one or more of the first and second inlets 116, 120, wherein the one or more inner spaces 144 is/are configured to house one or more of said at least one portion 124 of the first element 102 received by the first inlet 116 and said at least one portion 126 of the second element 104 received by the second inlet 120. In the embodiment illustrated in figures 1 to 5, the tubular member 112 forms one space 144. However, for other embodiments, the tubular member 112 may form two spaces with a partition between them.

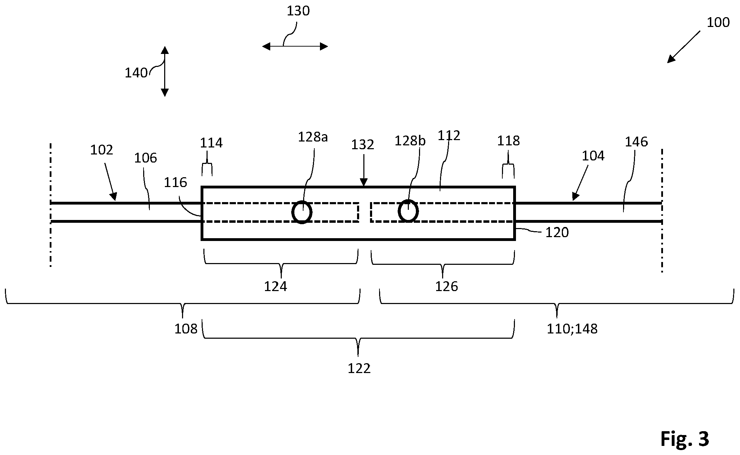

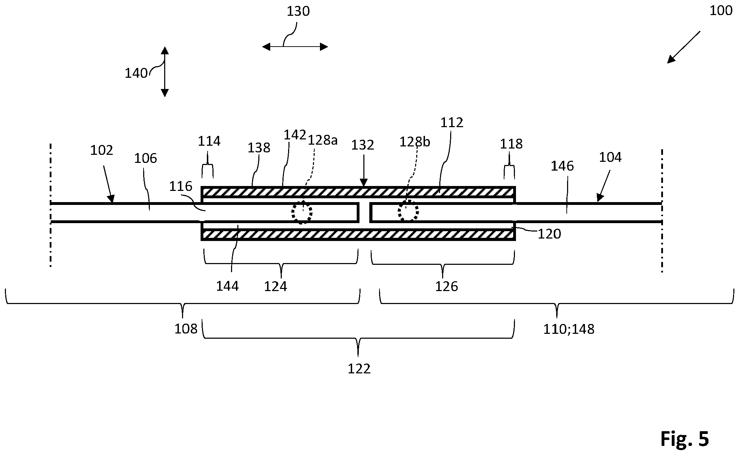

With reference to figures 3 and 5, for some embodiments, it may be defined that the longitudinal extension 122 of the tubular member 112 is configured to extend in a longitudinal direction 130 in parallel to the longitudinal extension 108 of the wire 106. For some embodiments, the second element 104 may comprise a wire 146 having a longitudinal extension 148. For illustrative purposes, only a short, or reduced, longitudinal extension, or length, of each wire 106, 146 is illustrated. However, it is to be understood that the wire 106, 146 may extend a considerable length in the direction away from the tubular member 112. The same applies for the other embodiments illustrated hereinbelow.

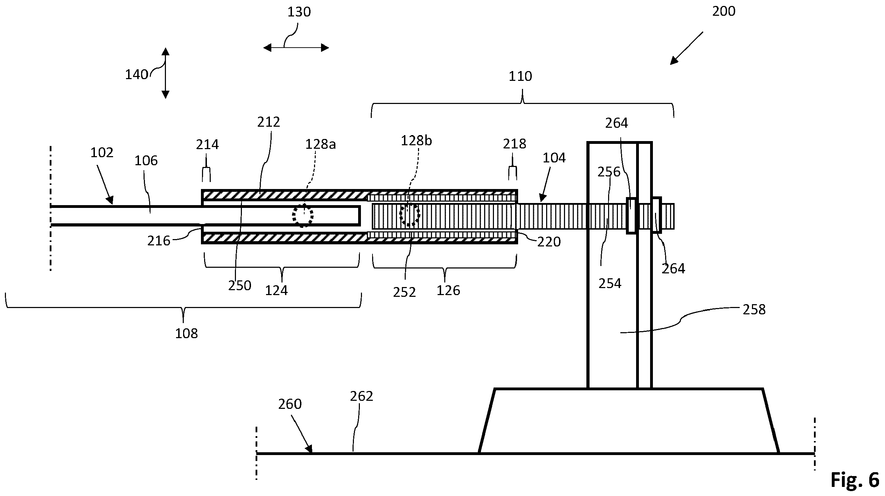

With reference to figure 6, a second embodiment of the attachment arrangement 200 for the attachment of a first element 102 to a second element 104 is schematically illustrated. The attachment arrangement 200 of figure 6 differs from the attachment arrangement 100 of figures 1 to 5 in that at one of the first and second end portions 214, 218 the tubular member 212 comprises one or more inner surfaces 250 adjoining one of the first and second inlets 216, 220, wherein the inner surface 250 comprises, or forms, one or more internal threads 252. For some embodiments, it may be defined that the one or more internal threads 252 is/are configured for the engagement with one or more external threads 254 of the second element 104. For some embodiments, the second element may comprise a threaded element 256 having one or more external threads 254, or a rigid threaded element 256 having one or more external threads 254. For some embodiments, the second element 104, such as the threaded element 256, may be configured for the attachment to a bracket 258, or a console, attachable to a structure 260 of a building, for example a roof 262 of a building, for example, with the aid of one or more nuts 264. For some embodiments, both of the first and second end portions 214, 218 of the tubular member 212 may have one or more inner surfaces comprising one or more internal threads. Otherwise, other features of the second embodiment of the attachment arrangement 200 illustrated in figure 6 may correspond to features of the first embodiment of the attachment arrangement 100 illustrated in figures 1 to 5 and are thus not repeated here. As mentioned above, for some embodiments, it may be defined that the first element 102 is configured for the attachment to a bracket attachable to a structure of a building, for example a roof 262 of a building.

With reference to figures 1 to 6, for some embodiments, the second element 104 may include one of the group of: a wire 146 having a longitudinal extension 148; a threaded element 256 having one or more external threads 254; and a rigid threaded element 256 having one or more external threads 254. However, other forms or types of the second element 104 are also possible.

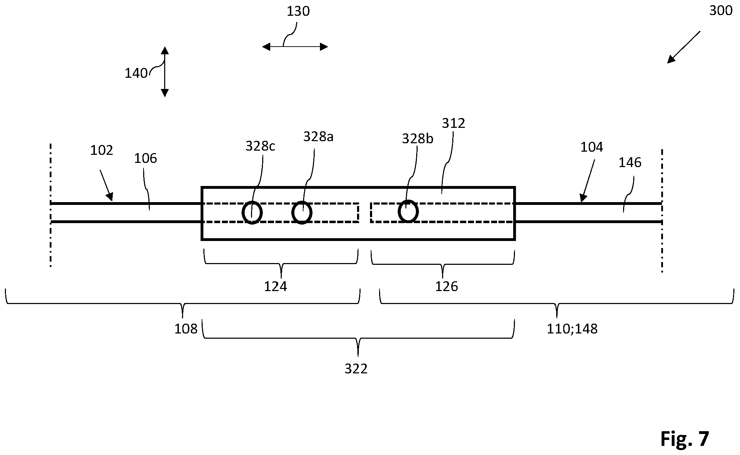

With reference to figure 7, a third embodiment of the attachment arrangement 300 for the attachment of a first element 102 to a second element 104 is schematically illustrated. The attachment arrangement 300 of figure 7 differs from the attachment arrangement 100 of figures 1 to 5 in that the tubular member 312 forms three inspection windows 328a-c, which are positioned one after another in the direction 130 of the longitudinal extension 322 of the tubular member 312, instead of two inspection windows. Otherwise, other features of the third embodiment of the attachment arrangement 300 illustrated in figure 7 may correspond to features of the first embodiment of the attachment arrangement 100 illustrated in figures 1 to 5 and are thus not repeated here.

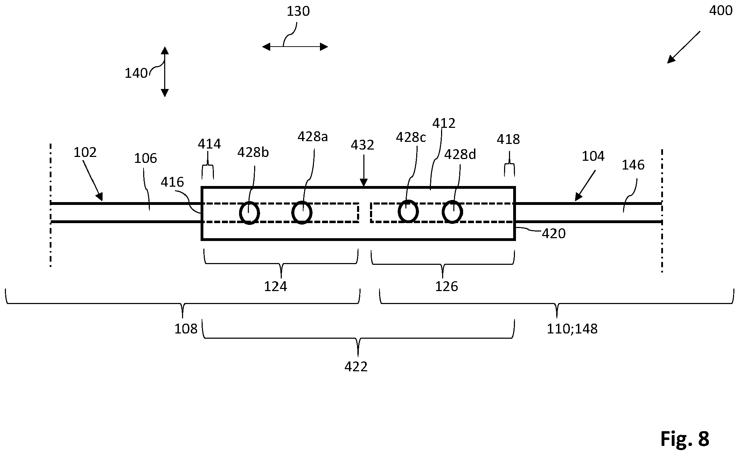

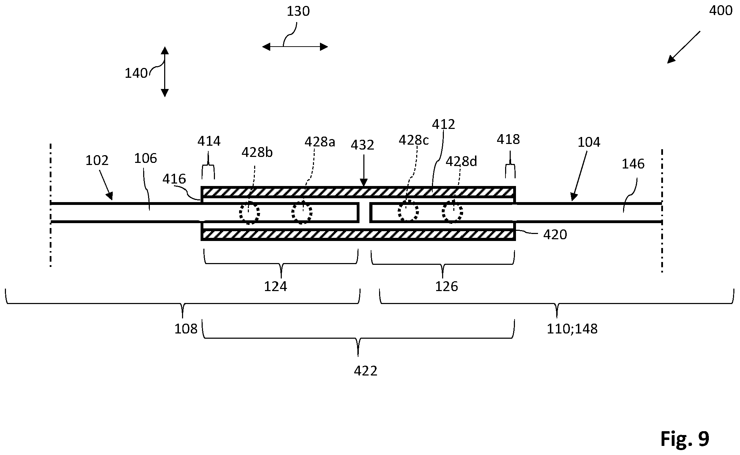

With reference to figures 8 and 9, a fourth embodiment of the attachment arrangement 400 for the attachment of a first element 102 to a second element 104 is schematically illustrated. The attachment arrangement 400 of figures 8 and 9 differs from the attachment arrangement 100 of figures 1 to 5 in that the tubular member 412 forms four or more inspection windows 428a-d positioned between the first and second inlets 416, 420 instead of two inspection windows, wherein the four or more inspection windows 428a-d are positioned one after another in the direction 130 of the longitudinal extension 422 of the tubular member 412 for the visual inspection of the positions of the first and second elements 102, 104 within the tubular member 412. For the embodiment illustrated in figures 8 and 9, the tubular member 412 forms four inspection windows 428a-d. It may be defined that the inspection windows 128a-b; 428a-d are spaced apart, such as in the direction 130 of the longitudinal extension 122; 422 of the tubular member 112; 412. The inspection window 128a-b; 428a-d may have various sizes and shapes, and may, for example, be circular or rectangular. For some embodiments, the inspection window may be elongated or oblong. For some embodiments, the longitudinal extension of the oblong inspection window may, for example, extend in the direction 130 of the longitudinal extension 122; 422 of the tubular member 112; 412. For some embodiments, the longitudinal extension of the oblong inspection window may extend in a direction transverse to the direction 130 of the longitudinal extension 122; 422 of the tubular member 112; 412.

With reference to figures 8 and 9, for some embodiments, it may be defined that the tubular member 412 has a center section 432, or middle, located between the first end portion 414 (or the first inlet 416) and the second end portion 418 (or the second inlet 420). The distance between the center section 432 and the first end portion 414 is equal to the distance between the center section 432 and the second end portion 418. For some embodiments, it may be defined that two or more inspection windows 428a-b of the four or more inspection windows 428a-d are located between the center section 432 and the first end portion 414 (or the first inlet 416). For some embodiments, it may be defined that two or more inspection windows 428c-d of the four or more inspection windows 428a-d are located between the center section 432 and the second end portion 418 (or the second inlet 420). Otherwise, other features of the fourth embodiment of the attachment arrangement 400 illustrated in figures 8 and 9 may correspond to features of the first embodiment of the attachment arrangement 100 illustrated in figures 1 to 5 and are thus not repeated here.

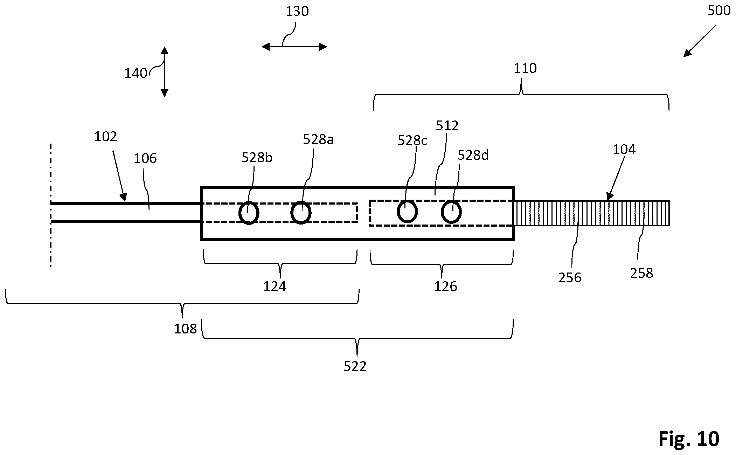

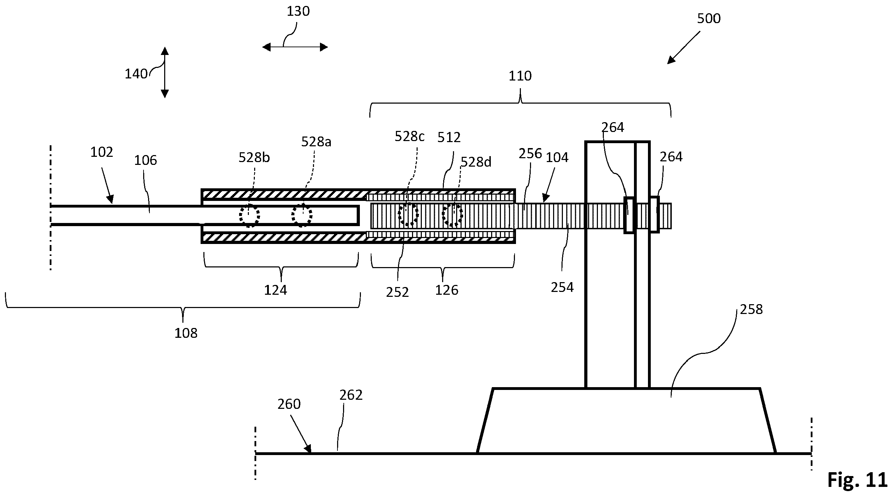

With reference to figures 10 and 11, a fifth embodiment of the attachment arrangement 500 for the attachment of a first element 102 to a second element 104 is schematically illustrated. The attachment arrangement 500 of figures 10 and 11 differs from the attachment arrangement 200 of figure 6 in that the tubular member 512 forms four inspection windows 528a-d, which are positioned one after another in the direction 130 of the longitudinal extension 522 of the tubular member 512, instead of two inspection windows. Otherwise, other features of the fifth embodiment of the attachment arrangement 500 illustrated in figures 10 and 11 may correspond to features of the second embodiment of the attachment arrangement 200 illustrated in figure 6 or may correspond to features of the fourth embodiment of the attachment arrangement 400 illustrated in figures 8 and 9 and are thus not repeated here.

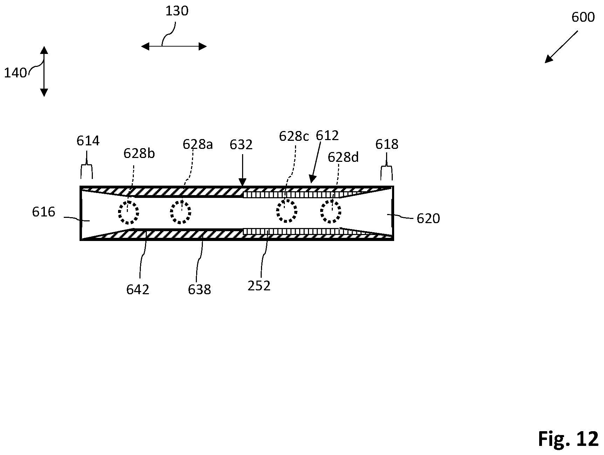

With reference to figure 12, a sixth embodiment of the attachment arrangement 600 for the attachment of a first element 102 to a second element 104 is schematically illustrated. The attachment arrangement 600 of figure 12 differs from the attachment arrangement 500 illustrated in figures 10 and 11 in that between the first and second end portions 614, 618, for example at the center section 632, the thickness of the wall 642 of the shell 638 exceeds the thickness of the wall 642 of shell 638 at the first and second inlets 616, 620, wherein the one or more walls 642 forms/form the two or more inspection windows 628a-d. More specifically, the wall 642 of shell 638 at the first and second inlets 616, 620 is thinner than the wall 642 of the shell 638 between the first and second end portions 614, 618. Otherwise, other features of the sixth embodiment of the attachment arrangement 600 illustrated in figure 12 may correspond to features of the fourth and fifth embodiments of the attachment arrangement 400, 500 illustrated in figures 8 to 11 and are thus not repeated here.

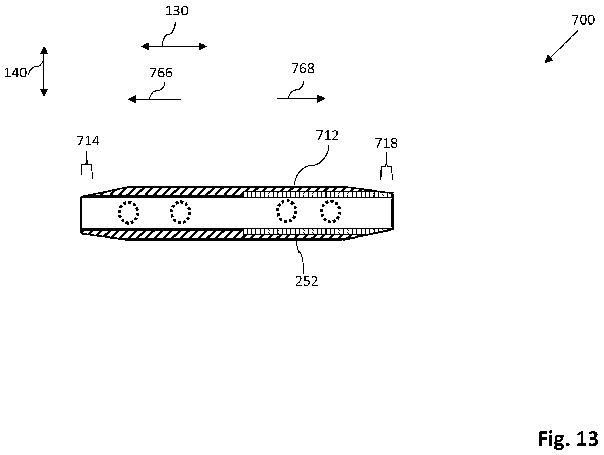

With reference to figure 13, a seventh embodiment of the attachment arrangement 700 for the attachment of a first element 102 to a second element 104 is schematically illustrated. The attachment arrangement 700 of figure 13 differs from the attachment arrangement 500 illustrated in figures 10 and 11 in that one or more of the first and second end portions 714, 718 is/are tapered in a direction 766, 768 away from the other one 714, 718 of the first and second end portions 714, 718. For the embodiment illustrated in figure 13, each one 714, 718 of the first and second end portions 714, 718 is tapered in a direction 766, 768 away from the other one 714, 718 of the first and second end portions 714, 718. Otherwise, other features of the seventh embodiment of the attachment arrangement 700 illustrated in figure 13 may correspond to features of the fourth and fifth embodiments of the attachment arrangement 400, 500 illustrated in figures 8 to 11 and are thus not repeated here.

With reference to figures 1 to 13, for some embodiments, the first element 102 may be defined as elongated. For some embodiments, the second element 104 may be defined as elongated.

For some embodiments, one or more of the tubular member 112; 212; 312; 412; 512; 612; 712, first element 102 and second element 104 may be made of a material comprising or consisting of a metal or a metal alloy, for example aluminium, steel, or any other metal. However, other materials are possible, such as a polymer or a polymer composite. For some embodiments, the attachment arrangement 100 may include one or more of the group of: the first element 102; and the second element 104.

With reference to figure 6, a roof or wall installation, such as a roof installation, comprising one or more attachment arrangements 100; 200; 300; 400; 500; 600; 700 according to any one of the embodiments disclosed above is also provided. Further, a roof 262 or wall arrangement comprising a roof 262 or wall, for example a roof arrangement comprising a roof 262, is provided. The roof 262 or wall arrangement comprises one or more of the group of: an attachment arrangement 100; 200; 300; 400; 500; 600; 700 according to any one of the embodiments disclosed above; and a roof 262 or wall installation according to any one of the embodiments disclosed above.

Although the embodiments of the attachment arrangement 100; 200; 300; 400; 500; 600; 700 disclosed above are illustrated when applied to a roof 262 or wall, it is to be understood that embodiments of the attachment arrangement 100; 200; 300; 400; 500; 600; 700 may be applied to other structures of a building.

The present invention is not limited to the above-described embodiments. Instead, the present invention relates to, and encompasses all different embodiments being included within the scope of the appended independent claim.

## Claims

1. An attachment arrangement (100; 200; 300; 400; 500; 600; 700) for the attachment of a first element (102) to a second element (104), the first element (102) comprising a wire (106) having a longitudinal extension (108), the second element (104) having a longitudinal extension (110),
wherein the attachment arrangement (100; 200; 300; 400; 500; 600; 700) comprises a tubular member (112; 212; 312; 412; 512; 612; 712),
wherein the tubular member (112) comprises a first end portion (114) forming a first inlet (116),
wherein the tubular member (112; 212; 312; 412; 512; 612; 712) comprises a second end portion (118) forming a second inlet (120),
wherein the tubular member (112) has a longitudinal extension (122) extending from the first end portion (114) to the second end portion (118),
wherein the first inlet (116) is configured to receive at least a portion (124) of the first element (102),
wherein the tubular member (112) is configured to house said at least one portion (124) of the first element (102) received by the first inlet (116) and configured to hold the first element (102),
wherein the second inlet (120) is configured to receive at least a portion (126) of the second element (104),
wherein the tubular member (112) is configured to house said at least one portion (126) of the second element (104) received by the second inlet (120) and configured to hold the second element (104),
wherein the tubular member (112; 212; 312; 412; 512; 612; 712) forms two or more inspection windows (128a-b; 328a-c; 428a-d; 528a-d) positioned between the first and second inlets (116, 120),
wherein the two or more inspection windows (128a-b; 328a-c; 428a-d; 528a-d) are positioned one after another in the direction (130) of the longitudinal extension (122; 422) of the tubular member (112; 212; 312; 412; 512; 612; 712) for the visual inspection of the positions of the first and second elements (102, 104) within the tubular member (112; 212; 312; 412; 512; 612; 712), and
wherein the tubular member (112; 212; 312; 412; 512; 612; 712) comprises a shell (138; 638) having a longitudinal extension (122) and forming the two or more inspection windows (128a-b; 628a-d).

2. An attachment arrangement (100; 200; 300; 400; 500; 600; 700) according to claim 1, wherein the tubular member (112) has a center section (132) located between the first end portion (114) and the second end portion (118),
wherein the distance (134) between the center section (132) and the first end portion (114) is equal to the distance (136) between the center section (132) and the second end portion (118),
wherein one or more inspection windows (128a) of the two or more inspection windows (128a-b) is/are located between the center section (132) and the first end portion (114), and
wherein one or more inspection windows (128b) of the two or more inspection windows (128a-b) is/are located between the center section (132) and the second end portion (118).

3. An attachment arrangement (400; 500; 600; 700) according to claim 1 or 2, wherein the tubular member (412) forms four or more inspection windows (428a-d) positioned between the first and second inlets (416, 420), and
wherein the four or more inspection windows (428a-d) are positioned one after another in the direction (130) of the longitudinal extension (422) of the tubular member (122) for the visual inspection of the positions of the first and second elements (102, 104) within the tubular member (412).

4. An attachment arrangement (400, 500; 600; 700) according to claim 3, wherein the tubular member (412) comprises a center section (432) located between the first end portion (414) and the second end portion (418),
wherein the distance between the center section (432) and the first end portion (414) is equal to the distance between the center section (432) and the second end portion (418), and
wherein two or more inspection windows (428a-b) of the four or more inspection windows (428a-d) are located between the center section (432) and the first end portion (414).

5. An attachment arrangement (400; 500; 600; 700) according to claim 4, wherein two or more inspection windows (428c-d) of the four or more inspection windows (428a-d) are located between the center section (432) and the second end portion (418).

6. An attachment arrangement (100; 200; 300; 400; 500; 600; 700) according to any one of the claims 1 to 5, wherein the longitudinal extension (122; 422) of the tubular member (112; 412) extends in a longitudinal direction (130).

7. An attachment arrangement (200; 500; 600; 700) according to any one of the claims 1 to 6, wherein at one (214, 218) of the first and second end portions (214, 218) the tubular member (218) comprises one or more inner surfaces (250) adjoining one of the first and second inlets (216, 220), and
wherein the inner surface (250) comprises one or more internal threads (252).

8. An attachment arrangement (200; 500; 600; 700) according to claim 7, wherein the one or more internal threads (252) is/are configured for the engagement with one or more external threads (254) of the second element (104).

9. An attachment arrangement (100; 200; 300; 400; 500; 600; 700) according to any one of the claims 1 to 8, wherein the second element (104) comprises one of the group of:
• a wire (146) having a longitudinal extension (148);
• a threaded element (256) having one or more external threads (254); and
• a rigid threaded element (256) having one or more external threads (254).

10. An attachment arrangement (100; 200; 300; 400; 500; 600; 700) according to any one of the claims 1 to 9, wherein the shell (138; 638) is at least partially deformable from the action of a gripper or clamping tool so as to lock one or more of the first and second elements (102, 104).

11. An attachment arrangement (100; 200; 300; 400; 500; 600; 700) according to any one of the claims 1 to 10, wherein the shell (138; 638) comprises one or more walls (142; 642) forming the two or more inspection windows (128a-b; 628a-d).

12. An attachment arrangement (600) according to claim 11, wherein between the first and second end portions (614, 618) the thickness of the wall (642) of the shell (638) exceeds the thickness of the wall (624) of shell (638) at the first and second inlets (616, 618).

13. An attachment arrangement (100; 200; 300; 400; 500; 600; 700) according to any one of the claims 1 to 12, wherein the tubular member (112) forms one or more inner spaces (144) opening to one or more of the first and second inlets (116, 120), and
wherein the one or more inner spaces (144) is/are configured to house one or more of said at least one portion (124) of the first element (102) received by the first inlet (116) and said at least one portion (126) of the second element (104) received by the second inlet (120).

14. An attachment arrangement (700) according to any one of the claims 1 to 13, wherein one or more of the first and second end portions (714, 718) is/are tapered in a direction (760, 762) away from the other one (714, 718) of the first and second end portions (714, 718).

15. An attachment arrangement (100; 200; 300; 400; 500; 600; 700) according to any one of the claims 1 to 14, wherein the longitudinal extension (122; 422) of the tubular member (112; 212; 312; 412; 512; 612; 712) is configured to extend in a longitudinal direction (130) in parallel to the longitudinal extension (108) of the wire (106).
